# NEUE EUROPÄISCHE PATENTSCHRIFT

(11) **EP 2 502 762 B2**
(45) Veröffentlichungstag und Bekanntmachung des Hinweises auf die Entscheidung über den Einspruch: **22.06.2022**
(45) Hinweis auf die Patenterteilung: 22.07.2015
(21) Anmeldenummer: 12001994.8
(22) Anmeldetag: 21.03.2012
(51) Int. Cl.: B60D 1/52, B60D 1/54, B60D 1/62

(54) **Steuergerät für eine Anhängekupplung und Anhängekupplung mit einem Steuergerät**
Control device for a tow bar and tow bar with a control device
Appareil de commande pour un attelage et attelage doté d'un appareil de commande

(30) Priorität: 23.03.2011 DE 102011014882; 31.05.2011 DE 202011101597 U; 14.07.2011 DE 202011103345 U
(43) Veröffentlichungstag der Anmeldung: 26.09.2012
(73) Patentinhaber: WESTFALIA - Automotive GmbH, 33378 Rheda-Wiedenbrück (DE)
(72) Erfinder: Beutin, Jörg, 33334 Gütersloh (DE); Röscheisen, Daniel, 33378 Rheda-Wiedenbrück (DE)
(74) Vertreter: Patentanwälte Bregenzer und Reule Partnerschaftsgesellschaft mbB

(56) Entgegenhaltungen:
- EP-A1- 1 702 802
- EP-A1- 2 233 326
- EP-A2- 1 225 069
- DE-A1- 10 211 572
- DE-A1-102004 009 465
- DE-A1-102006 060 520
- DE-A1-102009 012 709
- DE-A1-102010 004 336
- DE-B4-102004 037 707
- DE-U1- 20 203 270
- US-B1- 7 889 062

## Beschreibung

Die Erfindung betrifft ein Steuergerät für eine Anhängekupplung für ein ein Bordnetz aufweisendes Zugfahrzeug, insbesondere ein Personen-Kraftfahrzeug, gemäß dem Oberbegriff des Anspruchs 1.

Ein derartiges Steuergerät geht aus EP 1 225 069 A2 hervor.

Üblicherweise sind Steuergeräte bei Kraftfahrzeugen, auch elektrischen Kraftfahrzeugen, im Innenraum der Karosserie angeordnet, so dass sie vor Umwelteinflüssen geschützt sind. Nach außen führen die elektrischen Leitungen mit denen beispielsweise die Verriegelungseinrichtung oder auch ein Antrieb zum Verstellen des Kupplungsarms angeschlossen sind. Die derart im Innenraum des Kraftfahrzeugs angeordneten Steuergeräte sind problemlos an das Bordnetz des Kraftfahrzeugs anzuschließen, beispielsweise an ein Bussystem.

Allerdings benötigt das Steuergerät im Innenraum Platz, der extra für das Steuergerät reserviert werden muss. Auch die Nachrüstung eines Kraftfahrzeugs mit einer zumindest teilweise elektrisch arbeitenden Anhängekupplung, d.h. einer Anhängekupplung, die einen oder mehrere Stellmotoren zur Verstellung des Kupplungsarms oder Verstellung einer Verriegelungseinrichtung, oder einer Anhängekupplung, die Sensoren oder dergleichen umfasst, ist entsprechend schwierig. In der Regel müssen zahlreiche Kabel verlegt werden, wofür unter anderem auch Durchbrüche an der Karosserie des Kraftfahrzeugs notwendig sind.

Es ist daher die Aufgabe der vorliegenden Erfindung, ein Steuergerät für eine einfach installierbare Anhängekupplung sowie eine mit einem solchen Steuergerät ausgestattete Anhängekupplung bereitzustellen.

Zur Lösung der Aufgabe ist ein Steuergerät gemäß der technischen Lehre des Anspruchs 1 vorgesehen.

Die Steuereinrichtung ist in einem Schutzgehäuse zur Anordnung im Außenbereich des Zugfahrzeugs aufgenommen.

Die Erfindung sieht vor, dass das Steuergerät eine Datenschnittstelle für ein mobiles Kommunikationsgerät aufweist, mit dem das Steuergerät ansteuerbar ist und/oder zur Anzeige von Daten des Steuergeräts vorgesehen ist. Die Datenschnittstelle kann drahtlos, aber auch drahtgebunden sein, zum Beispiel eine Leitungsverbindung zu dem Kommunikationsgerät vorsehen.

Die Steuereinrichtung umfasst beispielsweise Überwachungselemente, zum Beispiel logische Schaltkreise, einen Mikroprozessor oder dergleichen, zur Überwachung einer Funktion der Anhängekupplung und/oder zur Steuerung einer Funktion der Anhängekupplung. Beispielsweise können mit der Steuereinrichtung Stellmotoren zum Verstellen des Kupplungsarms, zum Betätigen der Verriegelungseinrichtung oder dergleichen angesteuert und/oder überwacht werden. Selbstverständlich ist es vorteilhaft, wenn das Steuergerät auch eine oder mehrere Schnittstellen für Sensoren und/oder einen Sensor umfasst.

Ein Grundgedanke der vorliegenden Erfindung ist es, dass das Steuergerät im Schutzgehäuse robust verpackt ist und so ohne weiteres im Außenbereich des Zugfahrzeugs, beispielsweise eines Kraftfahrzeugs, angeordnet werden kann. Dadurch ist unter anderem die Herstellung elektrischer Leitungsverbindungen mit Komponenten der Anhängekupplung sehr einfach, da die Wege kurz sind. Zur Anbindung an das Bordnetz des Zugfahrzeugs reichen in der Regel wenige Leitungen, beispielsweise elektrische Versorgungsleitungen und/oder Kommunikationsleitungen.

Das Schutzgehäuse umfasst vorzugsweise ein Motorgehäuse, in dem der Antrieb für den Kupplungsarm und/oder die Verriegelungseinrichtung, insbesondere auch eine Antriebskomponente für die Verriegelungseinrichtung angeordnet sind. Beispielsweise ist ein Motor und/oder eine Kraftübertragungskomponente und/oder ein Getriebe und/oder eine Federanordnung des jeweiligen Antriebs in dem Schutzgehäuse angeordnet.

Das Schutzgehäuse ist also beispielsweise so gestaltet, dass es mindestens einen der anzusteuernden Motoren aufnimmt, zum Beispiel einen Verriegelungsantrieb oder Entriegelungsantrieb, einen Stellmotor zum Verstellen des Kupplungsarms oder dergleichen.

Weiterhin kann auch eine sonstige Antriebskomponente in dem Schutzgehäuse angeordnet sein, beispielsweise eine Federanordnung. Mittels der Federanordnung kann beispielsweise ein Verriegelungselement, z.B. ein Bolzen, eine Kugel oder dergleichen, betätigbar sein, zum Beispiel in Richtung der Verriegelungsstellung. In Kombination mit der Federanordnung ist es vorteilhaft, wenn ein insbesondere im Schutzgehäuse oder außerhalb angeordneter Antriebsmotor dann beispielsweise nur noch unidirektional arbeitet, d.h. dass beispielsweise ein Elektromotor in einer Richtung arbeitet, während in Gegenrichtung die Federanordnung wirkt.

Es ist auch möglich, dass mindestens ein Antriebsmotor separat von dem Schutzgehäuse ist, d.h. dass das Steuergerät eine Schnittstelle zur Ansteuerung eines außerhalb des Schutzgehäuses angeordneten Antriebsmotors aufweist, zum Beispiel eines Stellmotor zum Verstellen des Kupplungsarms zwischen der Gebrauchsstellung unter Nichtgebrauchsstellung. Eine besonders bevorzugte Ausführungsform der Erfindung sieht vor, dass ein Motor innerhalb des Schützgehäuses angeordnet ist, zumindest teilweise, während ein anderer Motor ein von dem Schutzgehäuse separater Motor ist, jedoch an das Steuergerät angeschlossen werden kann. Vorzugsweise ist die Schnittstelle abgedichtet, z.B. mit einer Dichtungsanordnung. Die Schnittstelle kann beispielsweise eine oder mehrere Stromleitungen zur elektrischen Energieversorgung des externen Antriebsmotors umfassen.

Das Schutzgehäuse kann auch einen Gusskörper, z.B. aus Kunstharz, Kunststoff oder dergleichen, umfassen oder durch einen Gusskörper gebildet sein, mit dem die Steuereinrichtung zumindest teilweise oder ganz vergossen ist.

Erfindungsgemäß ist vorgesehen, dass das Steuergerät mindestens eine Kommunikationsschnittstelle zur Kommunikation mit dem Bordnetz des Zugfahrzeugs und/oder mindestens eine Energieübertragungsschnittstelle zur Übertragung elektrischer Energie von dem Bordnetz des Zugfahrzeugs zu dem Steuergerät aufweist.

An dieser Stelle sei bemerkt, dass selbstverständlich das Steuergerät auch eine Energieversorgungseinrichtung an Bord umfassen kann, beispielsweise einen Akkupack oder dergleichen. Dann ist die elektrische Energieversorgung vom Zugfahrzeug an das Steuergerät nicht notwendig.

Auch eine autarke Ansteuerung und/oder Bedienung des Steuergeräts im Außenbereich des Zugfahrzeugs ist möglich, so dass das Steuergerät auch ohne eine Kommunikationsschnittstelle zur Kommunikation mit dem Bordnetz des Zugfahrzeugs arbeiten kann. In diesem Zusammenhang ist zu erwähnen, dass selbstverständlich auch eine direkte Ansteuerung oder Bedienung des Steuergeräts möglich und sinnvoll sein kann, wenn eine anderweitige Ansteuerung, d.h. nicht vom Bordnetz des Zugfahrzeugs her, gewünscht ist. Somit kann also beispielsweise eine Bedienschnittstelle direkt an Bord des Steuergeräts, zum Beispiel Tasten, eine drahtlose Schnittstelle und dergleichen, vorgesehen sein. Eine solche Bedienschnittstelle ist auch in Kombination mit einer Kommunikationsschnittstelle zur Kommunikation mit dem Bordnetz oder auch ohne eine solche Kommunikationsschnittstelle möglich.

Die Kommunikationsschnittstelle, die zur Kommunikation mit dem Bordnetz des Zugfahrzeugs vorgesehen ist, umfasst zweckmäßigerweise eine Busschnittstelle zur Ankopplung an einem Kommunikationsbus des Zugfahrzeugs. Die Kommunikationsschnittstelle kann auch ausschließlich durch eine solche Busschnittstelle gebildet sein, d.h. dass eine anderweitige Kommunikation zwischen dem Steuergerät und dem Bordnetz des Zugfahrzeugs nicht vorgesehen ist.

Weiterhin ist es möglich, dass die Kommunikationsschnittstelle über Energieleitungen, d.h. über Leitungen, mit denen das Steuergerät mit elektrischer Energie versorgt wird, mit dem Bordnetz des Zugfahrzeugs kommuniziert, in einer Ausgestaltung der Erfindung sogar ausschließlich über diese Energieleitungen mit dem Bordnetz des Zugfahrzeugs kommuniziert. Beispielsweise ist das Steuergerät über Energieleitungen mit dem Zugfahrzeug bzw. dessen Bordnetz verbunden und weist einen Modulator und/oder einen Demodulator zum Auf modulieren bzw. Demodulieren von Daten, die über die Energieleitungen übertragen werden. Es kann in diesem Fall eine Zweidraht-Verbindung ausreichen, d.h. es sind nur 2 elektrische Leitungen vom Bordnetz des Zugfahrzeugs zum Steuergerät zu führen. Die Kabelverlegung ist dadurch sehr vereinfacht.

Es versteht sich, dass beispielsweise auch eine getaktete Energieübertragung, zum Beispiel eine Pulsweitenmodulation oder dergleichen, zur Datenübertragung genutzt werden kann. Das Steuergerät wird also bei dieser Ausgestaltung der Erfindung nicht mit einer kontinuierlichen Spannungshöhe mit Energie versorgt, sondern sozusagen mit Spannungsblöcken.

Die Erfindung sieht vor, dass die jeweils erfindungsgemäß vorgesehene Kommunikationsschnittstelle und/oder die Energieübertragungsschnittstelle eine Trenneinrichtung zur galvanischen Trennung von dem Bordnetz des Zugfahrzeugs aufweisen. Die Trenneinrichtung kann beispielsweise einen oder mehrere Optokoppler, d.h. eine Optokopplereinrichtung, einen Transformator oder dergleichen (auch in Kombination miteinander) umfassen. Somit werden also beispielsweise Störungen, die beim Steuergerät entstehen, nicht auf das Bordnetz des Zugfahrzeugs übertragen und umgekehrt.

Eine besonders günstige Anordnung sieht vor, dass die Trenneinrichtung zur Anordnung im Innenraum des Zugfahrzeugs vorgesehen ist und über eine Leitungsverbindung mit dem Schutzgehäuse bzw. dem im Außenbereich befindlichen Steuergerät verbunden ist. Das Steuergerät umfasst also zum einen die Trenneinrichtung, zum andern das Schutzgehäuse, in dem die anderen, zur Steuerung und/oder Überwachung der Anhängekupplung vorgesehenen Komponenten des Steuergeräts angeordnet sind, wobei diese beiden Bestandteile des Steuergeräts über die Leitungsverbindung, zum Beispiel eine Zweidrahtverbindung, miteinander verbunden sind.

Die Leitungsverbindung kann auch einen Steckverbinder umfassen, mit der sie geöffnet bzw. geschlossen werden kann. Beispielsweise ist es möglich, dass an dem Steuergerät Steckkontakte (Vorsprung oder Aufnahme) vorhanden sind, in die die zur Trenneinrichtung führenden Leitungen eingesteckt werden können. Auch an der Trenneinrichtung können entsprechende Steckkontakte vorgesehen sein. Besonders vorteilhaft ist es, wenn Leitungen für diese Leitungsverbindung quasi in das Schutzgehäuse integriert sind, jedenfalls elektrisch mit diesem verbunden und in dessen Isolation integriert sind. Somit führt also eine Leitung quasi vom Schutzgehäuse weg, die dann geschützt im Innenbereich des Kraftfahrzeugs in die Trenneinrichtung eingesteckt werden kann. Eine Beeinträchtigung durch Spritzwasser, Schmutz oder sonstige Umwelteinflüsse ist dadurch effektiv verhindert. Die Abdichtung der Leitungsverbindung ist optimal gelöst.

Eine vorteilhafte Ausgestaltung der Erfindung sieht vor, dass in dem Schutzgehäuse mindestens ein Motor, beispielsweise ein Stellmotor zum Verstellen des Kupplungsarms, ein Stellmotor zum Verstellen eines Verriegelungselements der Verriegelungseinrichtung oder dergleichen angeordnet ist. Somit sind die Steuereinrichtung und der Motor durch dieselben Bauteile geschützt, die zum Kapseln eines Motors in der Regel notwendig sind. Selbstverständlich können in dem Schutzgehäuse auch mehrere Motoren und/oder eine Getriebekomponente oder ein Getriebe, ein Antriebsorgan, zum Beispiel ein Zugorgan oder dergleichen angeordnet sein.

Bevorzugt ist es, wenn das Steuergerät einen Akkumulator, insbesondere einen Pufferakkumulator, zur Speicherung elektrischer Energie aufweist. Wenn also die Verbindung zum Bordnetz des Zugfahrzeugs unterbrochen ist, ist immer noch genügend elektrische Energie für Steuerung- und/oder Versorgungsaufgaben vorhanden. Es ist aber auch möglich, insbesondere auch in Kombination mit dem Akkumulator, dass das Steuergerät eine Energieerzeugungseinrichtung zur Erzeugung elektrischer Energie aufweist. Beispielsweise kann die Energie durch Vibrationen erzeugt werden, die das Zugfahrzeug beim Fahrbetrieb erfährt. Auch durch Schwankungsbewegungen, Schwingungsbewegungen oder dergleichen, könnte eine Energieerzeugungseinrichtung, insbesondere ein elektrischer Generator, angetrieben werden. Auch ein Antrieb der Energieerzeugungseinrichtung durch beispielsweise den Fahrtwind des Zugfahrzeugs, d.h. ein pneumatischer Antrieb ist selbstverständlich möglich.

Durch die Anordnung des Steuergeräts im Außenbereich des Zugfahrzeugs ist auch die Anbindung oder Einbindung von Sensoren deutlich erleichtert.

Eine Ausgestaltung der Erfindung kann vorsehen, dass das Steuergerät einen oder mehrere Sensoren aufweist, die im Schutzgehäuse angeordnet sind. So kann beispielsweise ein Sensor, der die Position einer Verriegelungseinrichtung erfasst, direkt im Schutzgehäuse angeordnet sein. Dadurch ist der Sensor geschützt, kann aber dennoch effektiv arbeiten. Er ist vor Ort bei den mechanischen Komponenten der Anhängekupplung, nämlich Kupplungsarm, Verriegelungseinrichtung und dergleichen.

Es ist aber auch möglich, dass das Steuergerät mindestens einen Sensor umfasst, der außerhalb des Schutzgehäuses angeordnet ist und über eine fest mit dem Schutzgehäuse verbundene Leitung mit einer Auswerteeinrichtung in dem Schutzgehäuse verbunden ist. Die Leitung ist also integral mit dem Schutzgehäuse verbunden, beispielsweise an gespritzt, verklebt oder dergleichen, so dass eine elektrische Isolation optimal möglich ist. Es ist weiterhin zweckmäßig, dass auch der Sensor in diese Schutzkonfiguration eingebunden ist, d.h. dass der Sensor in den Schutz der Leitung eingebunden ist. Man kann sich die Situation so vorstellen, dass der Sensor in der Art eines Fühlers vor das Schutzgehäuse vorsteht und so nahe bei dem durch den Sensor zu erfassenden Bauteil, beispielsweise dem Kupplungsarm, einem Verriegelungsbauteil, zum Beispiel einem Verriegelungsbolzen, oder dergleichen, angeordnet ist.

Selbstverständlich ist es auch möglich, dass der Sensor oder die Sensoren ein von dem Steuergerät separates Bauteil bildet bzw. bilden und das Steuergerät eine Sensorschnittstelle zum Anschluss eines solchen Sensors aufweist. Der Sensor kann also vor Ort, im Außenbereich des Zugfahrzeugs, an das Steuergerät angekoppelt werden, zum Beispiel in eine Steckbuchse eingesteckt oder an einen Steckanschluss angesteckt werden.

Nachfolgend werden Ausführungsbeispiele der Erfindung anhand der Zeichnung erläutert. Es zeigen:
- Figur 1: eine perspektivische Schrägansicht einer Anhängekupplung, die mit einem erfindungsgemäßen Steuergerät im Außenbereich versehen ist, wobei der Kupplungsarm eine Gebrauchsstellung einnimmt,
- Figur 2: die Anhängekupplung gemäß Figur 1 von vorn oben, wobei der Kupplungsarm in Nichtgebrauchsstellung ist,
- Fig. 3a-3b: einen Bewegungsablauf des Kupplungsarms der Anhängekupplung gemäß Figuren 1, 2 aus der Gebrauchsstellung in die Nichtgebrauchsstellung,
- Figur 4: ein schematisches elektrisches Schaltbild der Anhängekupplung gemäß der Figuren 1-3,
- Figur 5: eine schematische Seitenansicht einer Anhängekupplung mit einem steckbaren Kupplungsarm, die in
- Figur 6: detaillierter dargestellt ist, und
- Figur 7: ein Detail A der Anhängekupplung gemäß Figur 6.

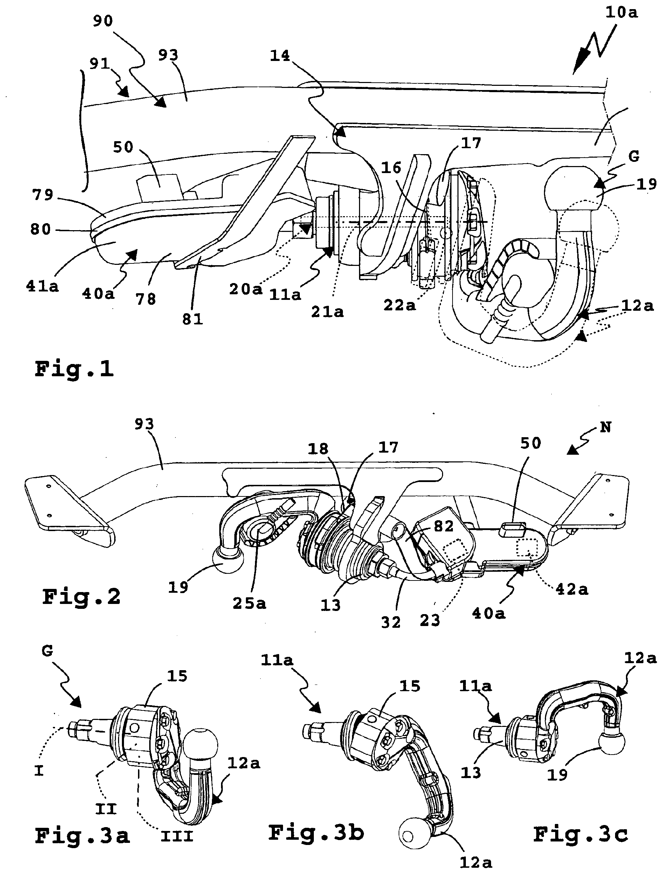

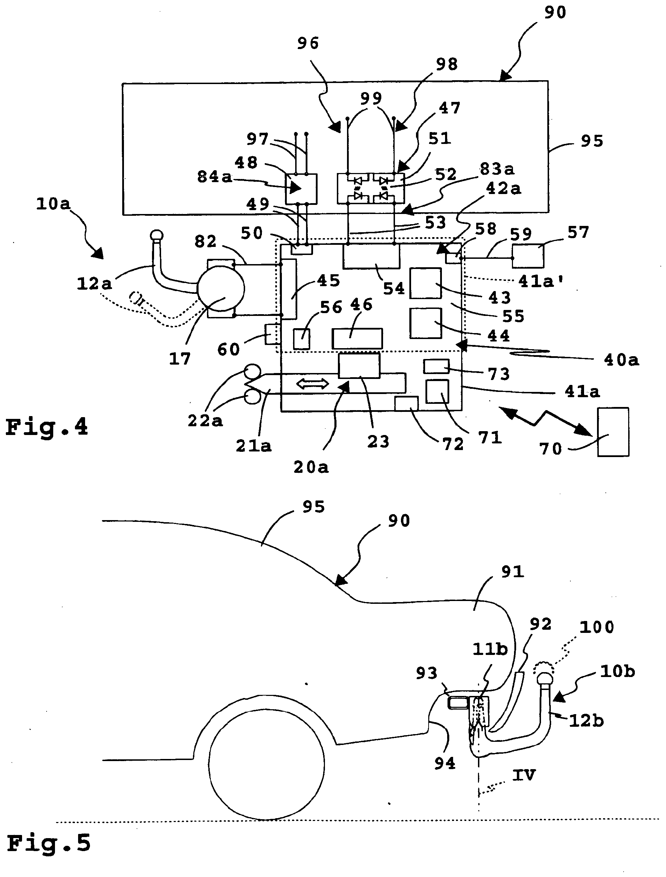

In den Figuren 1-4 ist eine Anhängekupplung 10a, in den Figuren 5-7 eine Anhängekupplung 10b dargestellt. Insoweit die Anhängekupplungen 10a, 10b gleiche oder gleichartige Komponenten aufweisen, tragen diese dieselbe Bezugszahl, teilweise jedoch mit einem Zusatz a oder b zur Verdeutlichung von Unterschieden.

Die Anhängekupplungen 10a, 10b sind an einem Heck 91 eines schematisch dargestellten Zugfahrzeugs 90 angeordnet. Das Zugfahrzeug 90 weist beispielsweise einen Stoßfänger 92 auf, hinter dem sich ein Träger 93 zum Halten der Anhängekupplung 10a oder 10b erstreckt. Der Träger 93 ist zwischen dem Stoßfänger 92 und einer hinteren Wand 94 einer Karosserie 95 des Zugfahrzeugs 90 angeordnet. Das Zugfahrzeug 90 ist beispielsweise ein Personenkraftwagen.

Die Anhängekupplungen 10a, 10b weisen Halter 11a, 11b auf, an denen im Falle der Anhängekupplung 10a ein Kupplungsarm 12a beweglich gelagert, im Falle der Anhängekupplung 10b ein Kupplungsarm 12b lösbar gehaltert ist.

Der Kupplungsarm 12a ist an dem Halter 11a schwenkbar zwischen einer Gebrauchsstellung G und einer Nichtgebrauchsstellung N gelagert. Selbstverständlich ist bei einer erfindungsgemäßen Anhängekupplung auch eine Schwenk-Schiebelagerung, eine ausschließliche Schiebelagerung oder eine mehrachsige Schwenklagerung ohne weiteres möglich.

Der Halter 11a umfasst einen Lagerkörper 13, der fahrzeugseitig fest steht, beispielsweise an einer fahrzeugseitigen Halteanordnung 14, z.B. einem Halteblech, befestigt ist. Am Lagerkörper 13 ist ein Lagerteil 15 schwenkbar um mehrere Achsen I, II und III in der Art eines Kugellagers gelagert. Von dem Lagerteil 15 steht der Kupplungsarm 12a ab. Die Halteanordnung 14 ist am Träger 93 befestigt, beispielsweise an diesen angeschweißt.

Der Kupplungsarm 12a ist durch einen Antrieb 16 zwischen der Gebrauchsstellung G und der Nichtgebrauchsstellung N antreibbar. Der Antrieb 16 umfasst beispielsweise einen Motor 17, der über einen Seilzug 18 auf das Lagerteil 15 bzw. einer dort angeordneten Mitnehmereinrichtung wirkt. Der Motor 17 ist beispielsweise ein Elektromotor. Es versteht sich, dass auch andere Antriebsarten, beispielsweise elektrische Direktantriebe, Zahngetriebe und dergleichen mehr ohne weiteres bei einer erfindungsgemäßen Anhängekupplung möglich sind.

Der Kupplungsarm 12b ist vom Halter 11b entfernbar bzw. an diesen ansteckbar. Beispielsweise hat der Kupplungsarm 12b ein Steckende 30, das in eine Steckaufnahme 31 am Halter 11b entlang einer Achse IV einsteckbar ist.

Am freien Ende der Kupplungsarme 12a, 12b sind Kuppelkörper 19 angeordnet, beispielsweise Kupplungskugeln, wobei auch Kuppelkörper mit anderen Geometrien möglich sind. An einen Kuppelkörper 19 kann z.B. eine Anhänger-Kupplung eines Anhängers 100 angekuppelt werden. Die Kuppelkörper 19 sind bezüglich der Kupplungsarme 12a, 12b feststehend, wobei alternativ zu einem jeweiligen Kupplungsarm bewegliche Kuppelkörper ohne weiteres möglich sind. In einem solchen Ausführungsfall, der in der Zeichnung nicht dargestellt ist, könnte die später noch beschriebene jeweilige Steuereinrichtung bzw. das Steuergerät auch zur Auswertung von Sensorsignalen ausgestaltet sein, die von einem Sensor erfasst werden, der die relative Bewegung des Kuppelkörpers relativ zum Kupplungsarm erfasst.

Am Halter 11a, z.B. im Innern des Lagerkörpers 13, ist eine Verriegelungseinrichtung 20a angeordnet, die einen Betätigungskörper 21a umfasst. Der Betätigungskörper 21a ist zwischen einer Lösestellung und einer Verriegelungsstellung verstellbar. In der Verriegelungsstellung betätigt der Betätigungskörper 21a Verriegelungskörper 22a, zum Beispiel Formschlusselemente, insbesondere Kugeln, in Formschlussgegenkonturen, so dass das Lagerteil 15 relativ zum Lagerkörper 13 unbeweglich festgesetzt ist. Die Verriegelungseinrichtung 20a ist zweckmäßigerweise zum Verriegeln des Kupplungsarms 12a in der Nichtgebrauchsstellung N und/oder der Gebrauchsstellung G ausgestaltet. Die Formschlussgegenkonturen sind beispielsweise am Lagerteil 15 angeordnet.

Ein ähnliches Verriegelungskonzept ist auch bei der Anhängekupplung 10b realisiert, allerdings mit dem Unterschied, dass die Verriegelungseinrichtung 20b am Kupplungsarm 12b angeordnet ist, insbesondere dessen Innenraum. Am Kupplungsarm 12b ist ein Betätigungskörper 21b beweglich gelagert, der ebenfalls zum Betätigen von Verriegelungskörpern 22b vorgesehen ist, beispielsweise auch Kugeln oder sonstigen Formstücken. Am Halter 11b, zum Beispiel im Innenraum der Steckaufnahme 31, sind beispielsweise Verriegelungsaufnahmen für die Verriegelungskörper 22b vorgesehen. Die Verriegelungskörper 22b werden z.B. vom Betätigungskörper 21b nach außen vor den Außenumfang des Steckendes 30 verdrängt, so dass sie in die Verriegelungsaufnahmen eingreifen.

An dieser Stelle sei bemerkt, dass selbstverständlich auch eine direkte Verriegelung mit einem Verriegelungselement möglich ist, d.h. dass beispielsweise ein Verriegelungsglied direkt in eine Verriegelungsaufnahme eingetrieben wird und kein vorgelagerter Betätigungskörper erforderlich ist. Beispielsweise kann ein Verriegelungsbolzen direkt angetrieben sein.

Selbstverständlich ist es vorteilhaft, wenn eine Verriegelungseinrichtung einer Anhängekupplung gemäß der Erfindung nicht nur verriegeln kann, sondern den Kupplungsarm relativ zum Halter auch verspannen kann, so dass beim Fahrbetrieb keine unerwünschten Bewegungen des Kupplungsarms relativ zum Halter auftreten.

Bei den Betätigungskörpern 21a, 21b handelt es sich beispielsweise um Verriegelungsbolzen.

Die Verriegelungseinrichtung 20a folgt einem motorischen Konzept, während die Verriegelungseinrichtung 20b manuell zu bedienen ist. Beispielsweise ist der Betätigungskörper 21a durch einen Antriebsmotor 23 zwischen der Verriegelungsstellung und der Lösestellung betätigbar, angedeutet durch einen Pfeil in Figur 4. Der Betätigungskörper 21b hingegen wird manuell betätigt, nämlich mittels eines Handrads 24, das über ein in der Zeichnung nicht sichtbares Getriebe, zum Beispiel ein Zahnstangengetriebe, in an sich bekannter Weise auf den Betätigungskörper 21b wirkt.

Bei Anhängekupplung 10a bildet der Kupplungsarm 12a sozusagen einen Träger für eine Anhängersteckdose 25a, die direkt am Kupplungsarm 12a befestigt ist und mit diesem zwischen der Gebrauchsstellung und der Nichtgebrauchsstellung bewegbar ist.

Eine Anhängersteckdose 25b der Anhängekupplung 10b hingegen ist separat vom Kupplungsarm 12b gehaltert, nämlich an einem Halter 26, der am Träger 93 befestigt ist. Der Halter 26 umfasst einen Arm 27, an dem ein Trageelement 28 zum Tragen der Anhängersteckdose 25b beweglich gelagert ist, beispielsweise mit einem Schwenklager 29.

Die Funktionen der Anhängekupplungen 10a, 10b werden zumindest teilweise, vorzugsweise insgesamt, von Steuergeräten 40a, 40b gesteuert und/oder überwacht. In Schutzgehäusen 41a, 41b sind vor Umwelteinflüssen geschützt Steuereinrichtungen 42a, 42b angeordnet, die beispielsweise logische Schaltkreise, Mikroprozessoren oder dergleichen umfassen.

Beispielsweise weist die Steuereinrichtung 42a einen Mikroprozessor 43, einen Speicher 44, sowie Schnittstellen 45, 46 zur Ansteuerung des Motors 17 für den Kupplungsarm 12a und für die Ansteuerung des Antriebsmotors 23 für die Verriegelungseinrichtung 20a auf.

Die einzelnen Komponenten der Steuereinrichtung 42b sind in der Zeichnung nicht näher dargestellt, entsprechen aber vorzugsweise prinzipiell denjenigen Komponenten der Steuereinrichtung 42a, umfassen also beispielsweise logische Schaltkreise, einen oder mehrere Mikroprozessoren und dergleichen mehr.

Die Steuergeräte 40a und 40b sind mit einem Bordnetz 96 des Zugfahrzeugs 90 verbindbar und in der dargestellten Konfiguration auch bereits verbunden. Bei dem Bordnetz 96 kann es sich um ein Einzeldrähte oder Einzeladern aufweisendes Bordnetz handeln, aber auch um ein Bordnetz, das sowohl Energieleitungen 97 als auch einen Fahrzeug-Bus 98 mit z.B. Bus-Leitungen 99 aufweist. Selbstverständlich ist ein erfindungsgemäßes Steuergerät auch an Mischformen derartiger Bordnetze anschließbar. Bei dem Fahrzeug-Bus 98 handelt es sich beispielsweise um einen CAN-Bus, einen LIN-Bus oder dergleichen.

Das Schutzgehäuse 41a umfasst zweckmäßigerweise ein Unterteil 78 und ein Oberteil 79, die dicht miteinander verbunden sind. An dem Oberteil 79 ist z.B. ein Dichtrand 80 vorgesehen, in den das Unterteil 78 eingreift. Ferner sind zweckmäßigerweise auch Dichtungen, O-Ringe oder dergleichen zwischen diesen Bauteilen und/oder auch an Stellen, wo das Schutzgehäuse 41a Öffnungen hat, vorgesehen. Beispielsweise ist eine Leitung 82, mit der der Motor 17 an die Schnittstelle 45 angeschlossen ist, entsprechend abgedichtet.

Das Schutzgehäuse 41a wird z.B. von einem Träger 81 gehalten, der am Träger 93 abgestützt ist.

Das Schutzgehäuse 41a nimmt vorzugsweise Komponenten der Verriegelungseinrichtung 20a auf, beispielsweise ein Endstück eines Zugelementes 32, mit dem der Betätigungskörper 21a betätigbar ist. Bei dem Zugelement 32 handelt es sich beispielsweise um eine Komponente eines Bowdenzugs. Mit dem Zugelement 32 kann der Betätigungskörper 21a entgegen der Kraft einer nicht dargestellten Feder in die Entriegelungsstellung betätigt werden, so dass der Kupplungsarm 12a freikommt und beweglich ist. Selbstverständlich ist die Feder nicht notwendig, d.h. eine Betätigung auf Schub wäre auch möglich, d.h. dass beispielsweise anstatt eines Zug-Bowdenzugs ein so genannter Zug-Schub-Bowdenzug vorgesehen ist.

In der Zeichnung ist dem Umstand, dass Teile der Verriegelungseinrichtung 20a in dem Schutzgehäuse 41a angeordnet sind, insofern Rechnung getragen, dass der schematisch dargestellte Betätigungskörper 21a mit einem Ende im Schutzgehäuse 41a angeordnet ist. Diese schematisch angedeutete Bauform wäre selbstverständlich ohne weiteres praktisch zu verwirklichen, d.h. dass beispielsweise hinten an den Lagerkörper 13 direkt das Schutzgehäuse 41a angebaut, zum Beispiel angeflanscht, ist.

Alternativ ist aber auch ein kleineres Schutzgehäuse 41a' angedeutet, das beispielsweise nur die Schnittstelle 46 enthält, während der Antriebsmotor 23 außerhalb des kleineren Schutzgehäuses 41a' angeordnet ist.

Jedenfalls sieht eine bevorzugte Ausführungsform der Erfindung vor, dass einer oder mehrere Antriebsmotoren, Stellmotoren oder dergleichen, innerhalb eines Schutzgehäuses angeordnet sind, dass auch die Steuereinrichtung enthält. So ist beispielsweise der Antriebsmotor 23 zusammen mit der Steuereinrichtung 42a im Innern, d.h. vor Umwelteinflüssen geschützt, des Schutzgehäuses 41a angeordnet.

Das Steuergerät 40a umfasst eine Trenneinrichtung 47, die im Innenraum des Zugfahrzeugs 90, d.h. im Innenraum der Karosserie 95 angeordnete Komponenten enthält. Die Trenneinrichtung 47 sorgt für eine galvanische Trennung zwischen dem Bordnetz 96 und den elektrischen Komponenten des Steuergeräts 40a, die im Außenbereich, d.h. ungeschützt, angeordnet sind, beispielsweise den im Schutzgehäuse 41a angeordneten Bauteilen.

Die Trenneinrichtung 47 umfasst beispielsweise einen Energieübertrager 48, z.B. einen Transformator oder einen sonstigen Energieübertrager, der mit den Energieleitungen 97 fahrzeugseitig verbunden ist. Der Energieübertrager 48 bildet einen Bestandteil einer Energieübertragungsschnittstelle 84a. Beispielsweise kann der Energieübertrager 48 elektronische Komponenten, insbesondere Leistungselektronik, umfassen. Von dem Energieübertrager 48 führen elektrische Leitungen 49 zu dem Schutzgehäuse 41a. Am Schutzgehäuse 41 ist beispielsweise eine Steckaufnahme 50 für einen Stecker vorhanden, der an den Leitungen 49 angeordnet ist. Mit diesem Stecker können die Leitungen 49 in das Schutzgehäuse 41a bzw. die Steckaufnahme 50 eingesteckt werden. Die Steckaufnahme 50 und der zugeordnete Stecker weisen vorzugsweise eine hohe Schutzart auf, d.h. sie sind z.B. spritzwassergeschützt.

Alternativ, was in der Zeichnung nicht dargestellt ist, könnte selbstverständlich auch eine Steckaufnahme an dem Energieübertrager 48 vorhanden sein, d.h. im Innenraum des Zugfahrzeugs 90, so dass eine elektrische Isolierung auf diesem Wege gegeben ist. In diesem Fall sind die Leitungen 49 vorzugsweise integral mit dem Schutzgehäuse 41 verbunden, beispielsweise verschweißt, verklebt oder dergleichen, um eine optimale elektrische Isolierung zu gewährleisten.

Das weiterhin ist es möglich, dass zur elektrischen Energieversorgung oder auch zur Pufferung von Energie beispielsweise eine Batterie oder ein Akkumulator 73 an Bord des Steuergeräts 40a vorgesehen ist. Natürlich ist auch eine Energieerzeugungseinrichtung anstelle oder in Ergänzung des Akkumulators 73 zweckmäßig.

Zur Ankopplung an den Fahrzeug-Bus 98 dient ein Buskoppler 51 der Trenneinrichtung 47. Der Buskoppler 51 ist direkt an die Leitungen des Fahrzeug-Busses 98 angekoppelt und kann über diese Leitungen des fahrzeugseitigen Kommunikationsbusses kommunizieren, beispielsweise Nachrichten gemäß dem CAN-Protokoll oder dem LIN-Protokoll senden und/oder empfangen. Somit ist eine Kommunikationsschnittstelle 83a realisiert.

Der Buskoppler 51 umfasst eine Optokopplereinrichtung 52, über die eine galvanischen Trennung zwischen einerseits den Leitungen des Fahrzeugs-Busses 98 und andererseits Kommunikationsleitungen 53 zwischen dem Buskoppler 51 und dem Schutzgehäuse 41 und/oder der Steuereinrichtung 42a realisiert ist.

Die Steuereinrichtung 42a umfasst ein Kommunikationsmodul 54, an das die Kommunikationsleitungen 53 angeschlossen sind. Beispielsweise ist es möglich, dass der Buskoppler 51 und das Kommunikationsmodul 54 seriell, parallel oder dergleichen miteinander kommunizieren. Weiterhin kann eine Bus-artige Kommunikation vorgesehen sein. Diese kann einem bekannten Protokoll folgen (zum Beispiel CAN, LIN oder dergleichen) oder auch ein proprietäres Protokoll, d.h. ein spezifisch für das Steuergerät 40a definiertes Protokoll, umfassen.

An dieser Stelle sei bemerkt, dass das Kommunikationsmodul 54 mit den übrigen Komponenten der Steuereinrichtung 42a über nicht dargestellte Leitungen kommuniziert, die beispielsweise auf einer Platine 55 verlaufen, auf der neben dem Kommunikationsmodul 54 vorzugsweise auch die Schnittstellen 45, 46 und/oder der Mikroprozessor 43 und/oder der Speicher 44 und dergleichen angeordnet sind. Selbstverständlich ist die Anordnung dieser Komponenten auf einer gemeinsamen Platine eine Option und nicht unbedingt notwendig.

Jedenfalls ist es vorteilhaft, wenn auf einer gemeinsamen Platine auch weitere Komponenten eines erfindungsgemäßen Steuergerät, insbesondere der Steuereinrichtung desselben, weitere Komponenten, zum-Beispiel-Sensoren und dergleichen angeordnet sind. Somit ist die Überwachung von Funktionen einer Anhängekupplung direkt vor Ort, nämlich im Außenbereich nahe beim Kupplungsarm möglich.

Beispielsweise umfasst die Steuereinrichtung 42a einen Sensor 56 zum Erfassen einer Stellung der Verriegelungseinrichtung 20a. Der Sensor 56 umfasst beispielsweise einen Positionssensor, Näherungsschalter, magnetischen Sensor oder dergleichen, der die jeweilige Position des Betätigungskörpers 21a erfasst. Der Sensor 56, der an Bord des Steuergeräts 40a, vorzugsweise im Innern des Schutzgehäuses 41a, angeordnet ist, ermittelt beispielsweise die Position des Betätigungskörpers 21a, so dass die Steuereinrichtung 42a anhand des Ausgangssignals des Sensors 56 feststellen kann, ob die Verriegelungseinrichtung 20a ihre Verriegelungsstellung einnimmt oder unverriegelt ist.

Ein weiterer Sensor 60, der beispielsweise außen am Schutzgehäuse 41a angeordnet ist, jedoch mit dem Mikroprozessor 43 kommunizieren kann, erfasst beispielsweise die Stellung des Kupplungsarms 12a, beispielsweise per Ultraschall, auf magnetischem Wege oder dergleichen. Denkbar ist es auch, dass beispielsweise im oder am Motor 17 ein Geber vorhanden ist, d.h. ein Sensor, der eine Information über eine jeweilige Stellung des Motors 17 und somit des Kupplungsarms 12a an die Steuereinrichtung 42a übermittelt.

Ein weiterer Sensor 57 ist beispielsweise an eine Sensorschnittstelle 58 des Steuergeräts 40a über eine Leitung 59 angeschlossen. Die Sensorschnittstelle 58 umfasst beispielsweise eine Steckbuchse, in die die Leitungen 59 oder ein an diesen angeordneter Stecker, einsteckbar sind. Mit dem Sensor 57 ist beispielsweise erfassbar, ob ein Anhänger 100 am Kuppelkörper 19 angeordnet ist oder nicht.

Der Sensor 57 kann aber auch ein Sensor sein, der eine zusätzliche Funktion der Anhängekupplung 10a erfasst. Beispielsweise kann der Sensor 57 ein Stützlastsensor sein, der eine auf den Kupplungsarm 12a einwirkende Stützlast erfasst. Die Steuereinrichtung 42a kann das Signal des Sensors 57 vorzugsweise auswerten und/oder umwandeln und die entsprechende Stützlastinformation über das Kommunikationsmodul 54 an das Bordnetz 96 des Zugfahrzeugs 90 melden. Es ist auch möglich, dass die Steuereinrichtung 42a das Signal des Sensors 57 unmittelbar, d.h. ohne eine Auswertung und/oder Modifikation, weiterleitet.

Der Sensor 57 kann auch zu einer Drehwinkelerfassung ausgestaltet sein, so dass er beispielsweise einen Relativwinkel des Anhängers 100 zum Zugfahrzeug 90 erfasst. Hierfür ist beispielsweise eine geeignete Sensorik, ein Mitnehmerkörper oder dergleichen vorn am Kuppelkörper 19 angeordnet (nicht dargestellt).

Eine besonders vorteilhafte Ausführungsform der Erfindung sieht dabei vor, dass diese zusätzliche sensorische Erfassung durch ein erfindungsgemäßes Steuergerät nur dann stattfindet und/oder das jeweiliges Sensorsignal über die Kommunikationsschnittstelle in Richtung Bordnetz des Zugfahrzeugs nur dann weitergegeben wird, wenn die Anhängekupplung 10a ihre Gebrauchsstellung G einnimmt und/oder verriegelt ist, die Verriegelungseinrichtung 20a also in ihrer Verriegelungsstellung ist. An dieser Stelle sei bemerkt, dass diese Ausführungsform selbstverständlich nicht nur dann vorteilhaft ist, wenn das Steuergerät im Außenbereich angeordnet ist, sondern auch bei einer Anordnung des Steuergeräts im Innenraum des Zugfahrzeugs.

Ferner ist es auch vorteilhaft, wenn ein erfindungsgemäßes Steuergerät eine Anhängersteckdose ansteuert oder eine solche umfasst. Insbesondere die Anordnung eines Steuergeräts, d.h. der Steuereinrichtung desselben, an oder in einer Anhängersteckdose ist zweckmäßig. Dies ist beim Ausführungsbeispiel gemäß Figuren 5-7 der Fall.

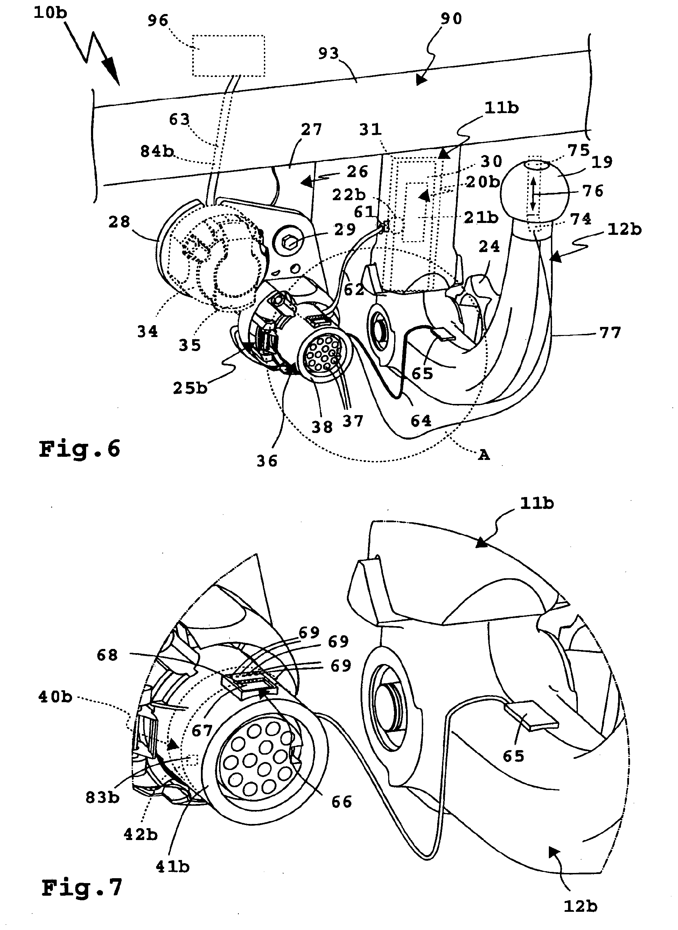

Beispielsweise umfasst die Anhängersteckdose 25b ein Dosengehäuse 34, das durch einen Deckel 35 verschließbar ist. Das Dosengehäuse 34 ist in Figur 6 gestrichelt und von einem Grundkörper 36 der Anhängersteckdose 25b entfernt, d.h. neben diesem angeordnet, dargestellt. In dem Grundkörper 36 sind elektrische Kontakte 37 zum Einstecken eines (nicht dargestellten) Steckers des Anhängers 100 vorhanden.

Diese Bauteile einer Anhängersteckdose sind bekannt, werden jedoch gemäß der Erfindung mit einem zusätzlichen Nutzen versehen. Der Grundkörper 36 umfasst nämlich ein Gehäuse 38, in dem die Steuereinrichtung 42b angeordnet ist. Mithin bildet also das Gehäuse 38 das Schutzgehäuse 41b. Die Steuereinrichtung 42b kann auch vergossen sein.

Das Steuergerät 40b ist also in die Anhängersteckdose 25b integriert. Beispielsweise steuert die Steuereinrichtung 42b die Kontakte 37 an und/oder überwacht die Kontakte 37. Beispielsweise erfasst die Steuereinrichtung 42b über die Kontakte 37 fließende Ströme, gibt über insbesondere leistungselektronische Komponenten Ströme und Spannungen aus, zum Beispiel zur elektrischen Versorgung von Leuchten des Anhängers 100, oder dergleichen.

Die Steuereinrichtung 42b erfasst weiterhin eine korrekte Verriegelung der Verriegelungseinrichtung 20b. Zu diesem Zweck hat die Steuereinrichtung 42b einen Sensor 61, der über eine Sensorleitung 62 mit dem Schutzgehäuse 41b elektrisch gekapselt und vor Umwelteinflüssen geschützt verbunden ist. Der Sensor 61 ist also quasi an einem Sensor-Ausleger oder Fühler angeordnet. Somit kann der Sensor 61 beispielsweise im Bereich einer der Verriegelungsaufnahmen für einen Verriegelungskörper 22b angeordnet werden und erfassen, ob der jeweilige Verriegelungskörper 22b in der Verriegelungsaufnahme ist, der Kupplungsarm 12b also am Halter 11b verriegelt ist.

Die Steuereinrichtung 42b gibt das Sensorsignal des Sensors 61 beispielsweise über eine Kommunikationsschnittstelle 83b, die zum Beispiel eine Busschnittstelle umfasst oder durch eine solche gebildet ist, an das Bordnetz 96 des Zugfahrzeugs 90 weiter.

Beispielsweise ist es möglich, dass beispielsweise die Leitungen des Fahrzeug-Busses 98 und/oder Energieleitungen (auch als Einzeldrähte) direkt zum Steuergerät 40a oder 40b geführt sind, oder wie bei der Anhängekupplung 10a anhand einer Trenneinrichtung eine galvanische Trennung vorhanden ist. Bei der Anhängekupplung 10b ist beispielsweise der Fahrzeug-Bus 98 zur Anhängersteckdose 25b bzw. dem Steuergerät 40b geführt. Weiterhin führen vom Bordnetz 96 Energieleitungen zum Steuergerät 40b und somit der Anhängersteckdose 25b, so dass eine Energieübertragungsschnittstelle 84b vorhanden ist. Die Verbindung zwischen dem Steuergerät 40b bzw. der Anhängersteckdose 25b und dem Bordnetz 96 ist in der Zeichnung durch eine Leitung 63 angedeutet. Wie gesagt, kann auch hier eine galvanische Trennung, eine Energietransformation oder dergleichen vorgesehen sein.

Das Steuergerät 40b ist ferner über eine Leitung 64 mit einem Stützlast-Sensor 65 verbunden, der unmittelbar am Kupplungsarm 12b angeordnet ist. Der Stützlast-Sensor 65 umfasst beispielsweise einen Dehnungsmessstreifen, der am Kupplungsarm 12b befestigt ist, zum Beispiel angeklebt. Der Stützlast-Sensor 65 meldet über die Leitung 64 Belastungen des Kupplungsarms 12b an das Steuergerät 40b, insbesondere die Steuereinrichtung 42b. Die Steuereinrichtung 42b überträgt das Signal des Stützlast-Sensors 65 beispielsweise nur dann an das Bordnetz 96, wenn die Anhängekupplung 10b verriegelt ist, der Sensor 61 also beispielsweise den Formschluss des Verriegelungskörpers 22b meldet. Ansonsten würde das Signal des Stützlast-Sensors 65 nicht plausibel sein.

Weiterhin ist es möglich, dass das Steuergerät 40b das Signal des Stützlast-Sensors 65 und/oder das Signal des Sensors 61 für die Verriegelungseinrichtung 20b an einem Display 66 anzeigt. Auch hier ist eine Abhängigkeitsprüfung dahingehend möglich, dass das Steuergerät 40b das Signal des Stützlast-Sensors 65 nur dann am Display 66 anzeigt, wenn die Verriegelungseinrichtung 20b verriegelt ist. Das Display 66 umfasst beispielsweise eine LCD-Anzeige 67 und/oder eine Leuchtdioden-Anzeige 68, die mehrere Leuchtdioden 69 umfasst, insbesondere Leuchtdioden mit unterschiedlichen Farben.

Weiterhin kann ein Sensor 74, zum Beispiel ein Drucksensor oder auch ein Sensor zum Erfassen eines Drehwinkels des Anhängers 100 relativ zum Kuppelkörper 19, mit dem Steuergerät 40b verbunden sein. Der Sensor 74 ist beispielsweise am oder im Kupplungsarm 12b angeordnet oder anordenbar und wird durch einen Betätigungskörper 75 betätigt. Wenn der Anhänger bzw. dessen Kupplung auf den Kuppelkörper 19 aufgesetzt wird, wird der Betätigungskörper 75 z. B. linear betätigt (angedeutet durch einen Pfeil 76) oder dreh-mitgenommen, was der Sensor 74 erfasst und über eine Leitung 77 an die Steuereinrichtung 42b meldet. Die Leitung 77 ist beispielsweise an das Gehäuse 38 angesteckt oder mit diesem integral verbunden.

Es versteht sich, dass ein erfindungsgemäßes Steuergerät vorteilhaft auch drahtlos ansteuerbar ist, beispielsweise zum Ein- und/oder Ausschalten eines Motors ansteuerbar ist oder dergleichen. Beispielhaft ist in Figur 4 ein mobiles Kommunikationsgerät 70 dargestellt, über das das Steuergerät 40a drahtlos ansteuerbar ist. Beispielsweise hat das Steuergerät 40a eine Drahtlos-Schnittstelle 71, insbesondere eine Mobilfunk-Schnittstelle, eine Infrarot-Schnittstelle, eine Bluetooth-Schnittstelle oder dergleichen.

Es ist aber möglich, dass direkt an einem erfindungsgemäßen Steuergerät Bedienelemente, zum Beispiel Tasten oder dergleichen, vorgesehen sind, mit denen das Steuergerät bedienbar ist. So kann der Antriebsmotor 23 beispielsweise über eine Bedien-Taste 72 zum Lösen der Verriegelungseinrichtung 20a angesteuert werden.

## Patentansprüche

1. Steuergerät für eine Anhängekupplung (10a; 10b) für ein ein Bordnetz (96) aufweisendes Zugfahrzeug (90), insbesondere ein Personen-Kraftfahrzeug, zum Anhängen eines Anhängers (100) an das Zugfahrzeug (90), wobei die Anhängekupplung (10a; 10b) einen Kupplungsarm (12a, 12b), an dem ein Kuppelkörper angeordnet ist, mit dem eine Anhänger-Kupplung des Anhängers verbindbar ist, und einen an dem Zugfahrzeug (90) angeordneten oder anordenbaren Fahrzeug-Halter (11a;11b) zum Halten des Kupplungsarms (12a, 12b) umfasst, und wobei das Steuergerät (40a; 40b) eine Steuereinrichtung (42a; 42b) zur Ansteuerung und/oder Überwachung eines Antriebs (16) zum Verstellen des Kupplungsarms (12a, 12b) zwischen einer nach hinten vor ein Heck (91) des Zugfahrzeugs (90) vorstehenden Gebrauchsstellung (G) und einer näher beim Heck (91) des Kraftfahrzeugs befindlichen, insbesondere hinter einen Stoßfänger (92) zurück verstellten, Nichtgebrauchsstellung (N) und/oder zur Ansteuerung und/oder Überwachung einer Verriegelungseinrichtung (20a; 20b) zur Verriegelung des Kupplungsarms (12a, 12b) an dem Fahrzeug-Halter (11a;11b) aufweist, wobei die Steuereinrichtung (42a; 42b) in einem Schutzgehäuse (41a; 41b) zur Anordnung im Außenbereich des Zugfahrzeugs (90) aufgenommen ist, **dadurch gekennzeichnet, dass** es eine insbesondere drahtlose Datenschnittstelle für ein mobiles Kommunikationsgerät (70) aufweist, mit dem das Steuergerät (40a; 40b) steuerbar ist und/oder das zur Anzeige von Daten des Steuergeräts (40a; 40b) vorgesehen ist, dass es mindestens eine Kommunikationsschnittstelle (83a; 83b) zur Kommunikation mit dem Bordnetz (96) des Zugfahrzeugs (90), wobei die Kommunikationsschnittstelle (83a; 83b) eine Trenneinrichtung (47), insbesondere eine Optokopplereinrichtung und/oder mindestens einen Transformator, zur galvanischen Trennung von dem Bordnetz (96) des Zugfahrzeugs (90) aufweist, und/oder dass es mindestens eine elektrische Energieübertragungsschnittstelle (84a; 84b)zur Übertragung elektrischer Energie von dem Bordnetz (96) des Zugfahrzeugs (90) zu dem Steuergerät (40a; 40b) aufweist, wobei die Energieübertragungsschnittstelle (84a; 84b) eine Trenneinrichtung (47), insbesondere eine Optokopplereinrichtung und/oder mindestens einen Transformator, zur galvanischen Trennung von dem Bordnetz (96) des Zugfahrzeugs (90) aufweist.

2. Steuergerät nach Anspruch 1, **dadurch gekennzeichnet, dass** die Kommunikationsschnittstelle (83a; 83b) eine Busschnittstelle zur Ankopplung an einen Kommunikationsbus des Bordnetzes (96) des Zugfahrzeugs (90) umfasst oder ausschließlich durch die Busschnittstelle gebildet ist.

3. Steuergerät nach Anspruch 1 oder 2 , **dadurch gekennzeichnet, dass** die Kommunikationsschnittstelle (83a; 83b) zu einer Datenkommunikation mit dem Bordnetz (96) über mit dem Bordnetz (96) verbindbare elektrische Energieleitungen der Energieübertragungsschnittstelle (84a; 84b)ausgestaltet ist.

4. Steuergerät nach einem der Ansprüche 1 bis 3, **dadurch gekennzeichnet, dass** die Trenneinrichtung (47) zur Anordnung in einem gegenüber dem Außenbereich des Zugfahrzeugs (90) abgetrennten Innenraum des Zugfahrzeugs (90) vorgesehen ist, insbesondere ein Modul zur Anordnung in dem Innenraum des Zugfahrzeugs (90) aufweist, und über eine Leitungsverbindung und/oder eine drahtlose Schnittstelle mit dem Schutzgehäuse (41a; 41b) verbunden ist, wobei die Trenneinrichtung (47) zweckmäßigerweise die Busschnittstelle zur Ankopplung an einen Kommunikationsbus des Bordnetzes (96) des Zugfahrzeugs (90) umfasst.

5. Steuergerät nach einem der vorhergehenden Ansprüche, **dadurch gekennzeichnet, dass** es mindestens einen Akkumulator (73) zur Speicherung elektrischer Energie und/oder mindestens eine Energieerzeugungseinrichtung zur Erzeugung elektrischer Energie aufweist.

6. Steuergerät nach einem der vorhergehenden Ansprüche, **dadurch gekennzeichnet, dass** es mindestens einen Sensor und/oder mindestens eine Sensorschnittstelle (58) zum Anschluss mindestens eines von dem Steuergerät (40a; 40b) separaten Sensors aufweist und/oder dass es mindestens einen Sensor (56) aufweist, der in dem Schutzgehäuse (41a; 41b), insbesondere gemeinsam mit einer weiteren Komponente der Steuereinrichtung (42a; 42b) auf einer Platine (55), angeordnet ist, und/oder dass es mindestens einen Sensor (61) umfasst, der außerhalb des Schutzgehäuses (41a; 41b) angeordnet ist und über eine fest mit dem Schutzgehäuse (41a; 41b) verbundene Leitung (62) mit dem Schutzgehäuse (41a; 41b), insbesondere einer Auswerteeinrichtung in dem Schutzgehäuse (41a; 41b), verbunden ist.

7. Steuergerät nach einem der vorhergehenden Ansprüche, **dadurch gekennzeichnet, dass** es zu einer Weitergabe eines Signals des mindestens einen Sensors in Abhängigkeit von mindestens einer weiteren Bedingung, insbesondere einer Stellung der Verriegelungseinrichtung (20a; 20b) und/oder des Kupplungsarms (12a, 12b), ausgestaltet ist, insbesondere zur Blockierung des Signals ausgestaltet ist, wenn die Verriegelungseinrichtung (20a; 20b) unverriegelt ist und/oder der Kupplungsarm (12a, 12b) außerhalb seine Gebrauchsstellung (G) ist.

8. Steuergerät nach einem der vorhergehenden Ansprüche, **dadurch gekennzeichnet, dass** es eine Bedienschnittstelle zur direkten Bedienung durch einen Bediener, insbesondere mindestens eine Bedientaste, und/oder dass es eine Anzeige, insbesondere mindestens ein Display (66), aufweist.

9. Steuergerät nach einem der vorhergehenden Ansprüche, **dadurch gekennzeichnet, dass** in dem Schutzgehäuse (41a; 41b) mindestens ein Motor (23) angeordnet ist oder das Schutzgehäuse (41a; 41b) von einem Motorgehäuse gebildet ist, in dem mindestens ein Motor (23) angeordnet ist, und/oder dass in dem Schutzgehäuse (41a; 41b) eine als Antriebselement ausgestaltete Federanordnung angeordnet ist.

10. Steuergerät nach einem der vorhergehenden Ansprüche, **dadurch gekennzeichnet, dass** es eine insbesondere abgedichtete Schnittstelle (45) zur Ansteuerung eines außerhalb des Schutzgehäuses (41a; 41b) angeordneten, insbesondere zum Verstellen des Kupplungsarms (12a, 12b) zwischen der Gebrauchsstellung (G) und der Nichtgebrauchsstellung (N) vorgesehenen, Motors (17) aufweist.

11. Steuergerät nach einem der vorhergehenden Ansprüche, **dadurch gekennzeichnet, dass** das Schutzgehäuse (41a; 41b) von einem Dosengehäuse (38) einer Anhängersteckdose (25a; 25b) zur elektrischen Versorgung des Anhängers (100) gebildet ist oder an oder in einer Anhängersteckdose (25a; 25b) angeordnet ist, und/oder dass es zur Ansteuerung einer Anhängersteckdose (25a; 25b) zur elektrischen Versorgung des Anhängers (100) ausgestaltet ist und/oder die Anhängersteckdose (25a; 25b) umfasst.

12. Anhängekupplung (10a; 10b) mit einem Steuergerät (40a; 40b) nach einem der vorhergehenden Ansprüche.

## Claims

1. Control unit for a trailer coupling (10a; 10b) for a towing vehicle (90) with an onboard power supply (96), in particular a passenger car, for attaching a trailer (100) to the towing vehicle (90), wherein the trailer coupling (10a; 10b) has a coupling arm (12a; 12b) on which is mounted a coupling body which may be connected to a trailer coupling of the trailer, and includes a vehicle holder (11a; 11b) for holding the coupling arm (12a; 12b), mounted or able to be mounted on the towing vehicle (90), and wherein the control unit (40a; 40b) has a control device (42a; 42b) for driving and/or monitoring a drive (16) for adjustment of the coupling arm (12a; 12b) between a position of use (G) extending backwards beyond a rear section (91) of the towing vehicle (90) and an inoperative position (N) located closer to the rear section (91) of the motor vehicle, in particular shifted back behind a bumper (92), and/or for driving and/or monitoring a locking device (20a; 20b) for locking the coupling arm (12a; 12b) to the vehicle holder (11a; 11b), wherein the control device (42a; 42b) is accommodated in a protective housing (41a; 41b) for mounting in the outer area of the towing vehicle (90), **characterised in that** it has a data interface, in particular wireless, for a mobile communications device (70), by which the control unit (40a; 40b) may be controlled and/or is provided to display data from the control unit (40a; 40b), that it has at least one communications interface (83a; 83b) for communication with the onboard power supply (96) of the towing vehicle (90), wherein the communications interface (83a; 83b) has a disconnector (47), in particular an optocoupler device and/or at least one transformer, for galvanic isolation from the onboard power supply (96) of the towing vehicle (90), and/or that it has at least one electrical power transmission interface (84a; 84b) for transmission of electrical power from the onboard power supply (96) of the towing vehicle (90) to the control unit (40a; 40b), wherein the electrical power transmission interface (84a; 84b) has a disconnector (47), in particular an optocoupler device and/or at least one transformer, for galvanic isolation from the onboard power supply (96) of the towing vehicle (90).

2. Control unit according to claim 1, **characterised in that** the communications interface (83a; 83b) includes a bus interface for coupling to a communications bus of the onboard power supply (96) of the towing vehicle (90), or is formed solely by the bus interface.

3. Control unit according to claim 1 or 2, **characterised in that** the communications interface (83a; 83b) is designed for data communication with the onboard power supply (96) via electrical power lines of the power transmission interface (84a; 84b) which may be connected to the onboard power supply (96).

4. Control unit according to any of claims 1 to 3, **characterised in that** the disconnector (47) is provided for mounting in an interior of the towing vehicle (90) separated from the outer area of the towing vehicle (90), in particular has a module for mounting in the interior of the towing vehicle (90), and is connected to the protective housing (41a; 41b) via a cable connection and/or a wireless interface, wherein the disconnector (47) expediently includes the bus interface for coupling to a communications bus of the onboard power supply (96) of the towing vehicle (90).

5. Control unit according to any of the preceding claims, **characterised in that** it has at least one storage battery (73) for the storage of electrical power and/or at least one power generation device for the generation of electrical power.

6. Control unit according to any of the preceding claims, **characterised in that** it has at least one sensor and/or at least one sensor interface (58) for the connection of at least one sensor separate from the control unit (40a; 40b), and/or that it has at least one sensor (56) which is mounted in the protective housing (41a; 41b), in particular together with a further component of the control device (42a; 42b) on a printed circuit board (55), and/or that it includes at least one sensor (61) which is mounted outside the protective housing (41a; 41b) and is connected to the protective housing (41a; 41b), in particular an evaluation device in the protective housing (41a; 41b), via a cable (62) connected permanently to the protective housing (41a; 41b).

7. Control unit according to any of the preceding claims, **characterised in that** it is designed for transmission of a signal of the sensor or sensors depending on at least one further condition, in particular a position of the locking device (20a; 20b) and/or the coupling arm (12a; 12b), in particular for blocking the signal if the locking device (20a; 20b) is unlocked and/or the coupling arm (12a; 12b) is outside its position of use (G).

8. Control unit according to any of the preceding claims, **characterised in that** it has a control interface for direct control by an operator, in particular at least one control button, and/or that it has an indicator, in particular at least one display (66).

9. Control unit according to any of the preceding claims, **characterised in that** at least one motor (23) is mounted in the protective housing (41a; 41b) or else the protective housing (41a; 41b) is formed by a motor housing in which is mounted at least one motor (23), and/or that a spring assembly designed as drive element is mounted in the protective housing (41a; 41b).

10. Control unit according to any of the preceding claims, **characterised in that** it has an interface (45), in particular sealed, for driving a motor (17) mounted outside the protective housing (41a; 41b), in particular for adjustment of the coupling arm (12a; 12b) between the position of use (G) and the inoperative position (N).

11. Control unit according to any of the preceding claims, **characterised in that** the protective housing (41a; 41b) is formed by a socket housing (38) of a trailer socket (25a; 25b) for the electrical supply of the trailer (100), and/or that it is designed for driving a trailer socket (25a; 25b) for the electrical supply of the trailer (100) and/or includes the trailer socket (25a; 25b).

12. Trailer coupling (10a; 10b) with a control unit (40a; 40b) according to any of the preceding claims.

## Revendications

1. Appareil de commande pour un attelage (10a ; 10b) pour un véhicule tracteur (90), en particulier un véhicule automobile personnel, présentant un réseau de bord (96) pour l'attelage d'une remorque (100) au véhicule tracteur (90), dans lequel l'attelage (10a ; 10b) comporte un bras d'attelage (12a, 12b) sur lequel est agencé un corps de couplage, auquel un attelage de la remorque peut être relié, et un support de véhicule (11a; 11b) agencé ou pouvant être agencé sur le véhicule tracteur (90) pour le support du bras d'attelage (12a, 12b), et dans lequel l'appareil de commande (40a; 40b) présente un dispositif de commande (42a ; 42b) pour la commande et/ou la surveillance d'un entraînement (16) pour le déplacement du bras d'attelage (12a, 12b) entre une position d'utilisation (G) dépassant vers l'arrière avant une partie arrière (91) du véhicule tracteur (90) et une position de nonutilisation (N) se trouvant plus près de la partie arrière (91) du véhicule automobile, en particulier redéplacée derrière un pare-chocs (92) et/ou pour la commande et/ou la surveillance d'un dispositif de verrouillage (20a; 20b) pour le verrouillage du bras d'attelage (12a, 12b) sur le support de véhicule (11a; 11b), dans lequel le dispositif de commande (42a; 42b) est reçu dans un boîtier de protection (41a; 41b) pour l'agencement dans la zone extérieure du véhicule tracteur (90), **caractérisé en ce qu'**il présente une interface de données en particulier sans fil pour un appareil de communication mobile (70), avec lequel l'appareil de commande (40a; 40b) peut être commandé et/ou qui est prévu pour l'affichage des données de l'appareil de commande (40a; 40b),
**en ce qu'**il présente au moins une interface de communication (83a ; 83b) pour la communication avec le réseau de bord (96) du véhicule tracteur (90), dans lequel l'interface de communication (83a ; 83b) présente un dispositif de séparation (47), en particulier un dispositif photocoupleur et/ou au moins un transformateur pour la séparation galvanique du réseau de bord (96) du véhicule tracteur (90), et/ou **en ce qu'**il présente au moins une interface de transmission d'énergie (84a; 84b) électrique pour la transmission d'énergie électrique du réseau de bord (96) du véhicule tracteur (90) à l'appareil de commande (40a; 40b), dans lequel l'interface de transmission d'énergie (84a ; 84b) présente un dispositif de séparation (47), en particulier un dispositif photocoupleur et/ou au moins un transformateur pour la séparation galvanique du réseau de bord (96) du véhicule tracteur (90).

2. Appareil de commande selon la revendication 1, **caractérisé en ce que** l'interface de communication (83a; 83b) comporte une interface de bus pour le couplage à un bus de communication du réseau de bord (96) du véhicule tracteur (90) ou est formée exclusivement par l'interface de bus.

3. Appareil de commande selon la revendication 1 ou 2, **caractérisé en ce que** l'interface de communication (83a; 83b) pour une communication de données avec le réseau de bord (96) est configurée par des câbles d'énergie électrique pouvant être reliés au réseau de bord (96) de l'interface de transmission d'énergie (84a ; 84b).

4. Appareil de commande selon l'une quelconque des revendications 1 à 3, **caractérisé en ce que** le dispositif de séparation (47) est prévu pour l'agencement dans un espace intérieur du véhicule tracteur (90) séparé par rapport à la zone extérieure du véhicule tracteur (90), présente en particulier un module pour l'agencement dans l'espace intérieur du véhicule tracteur (90), et est relié par une liaison de câble et/ou une interface sans fil au boîtier de protection (41a; 41b), le dispositif de séparation (47) comportant de manière appropriée l'interface de bus pour le couplage à un bus de communication du réseau de bord (96) du véhicule tracteur (90).

5. Appareil de commande selon l'une quelconque des revendications précédentes, **caractérisé en ce qu'**il présente au moins un accumulateur (73) pour le stockage de l'énergie électrique et/ou au moins un dispositif de génération d'énergie pour la génération d'énergie électrique.

6. Appareil de commande selon l'une quelconque des revendications précédentes, **caractérisé en ce qu'**il présente au moins un capteur et/ou au moins une interface de capteur (58) pour le raccordement au moins d'un capteur séparé de l'appareil de commande (40a; 40b) et/ou **en ce qu'**il présente au moins un capteur (56) qui est agencé dans le boîtier de protection (41a; 41b), en particulier conjointement avec un autre composant du dispositif de commande (42a; 42b) sur une platine (55) et/ou **en ce qu'**il comporte au moins un capteur (61) qui est agencé en dehors du boîtier de protection (41a; 41b) et est relié, par un câble (62) relié fixement au boîtier de protection (41a; 41b), au boîtier de protection (41a; 41b), en particulier d'un dispositif d'évaluation dans le boîtier de protection (41a; 41b).

7. Appareil de commande selon l'une quelconque des revendications précédentes, **caractérisé en ce qu'**il est configuré pour une transmission d'un signal de l'au moins un capteur en fonction d'au moins une autre condition, en particulier d'une position du dispositif de verrouillage (20a; 20b) et/ou du bras d'attelage (12a, 12b), en particulier est configuré pour le blocage du signal lorsque le dispositif de verrouillage (20a; 20b) est déverrouillé et/ou le bras d'attelage (12a, 12b) est en dehors de sa position d'utilisation (G).

8. Appareil de commande selon l'une quelconque des revendications précédentes, **caractérisé en ce qu'**il présente une interface de commande pour la commande directe par un opérateur, en particulier au moins une touche de commande, et/ou **en ce qu'**il présente un affichage, en particulier au moins un écran (66).

9. Appareil de commande selon l'une quelconque des revendications précédentes, **caractérisé en ce qu'**au moins un moteur (23) est agencé dans le boîtier de protection (41a; 41b) ou le boîtier de protection (41a; 41b) est formé par un boîtier de moteur, dans lequel au moins un moteur (23) est agencé et/ou **en ce qu'**un agencement à ressort configuré comme élément d'entraînement est agencé dans le boîtier de protection (41a; 41b).

10. Appareil de commande selon l'une quelconque des revendications précédentes, **caractérisé en ce qu'**il présente une interface (45) étanche en particulier pour la commande d'un moteur (17) agencé en dehors du boîtier de protection (41a; 41b), prévu en particulier pour le déplacement du bras d'attelage (12a, 12b) entre la position d'utilisation (G) et la position de nonutilisation (N).

11. Appareil de commande selon l'une quelconque des revendications précédentes, **caractérisé en ce que** le boîtier de protection (41a; 41b) est formé par un boîtier de prise (38) d'une prise de remorque (25a; 25b) pour l'alimentation électrique de la remorque (100) ou est agencé sur ou dans une prise de remorque (25a ; 25b) et/ou **en ce qu'**il est configuré pour la commande d'une prise de remorque (25a; 25b) pour l'alimentation électrique de la remorque (100) et/ou comporte la prise de remorque (25a ; 25b).

12. Attelage (10a ; 10b) avec un appareil de commande (40a; 40b) selon l'une quelconque des revendications précédentes.
